**Europäisches Patentamt**

(19) **European Patent Office**

**Office européen des brevets**

(11) Numéro de publication: **0 179 700**
**B1**

(12) # FASCICULE DE BREVET EUROPÉEN

(45) Date de publication du fascicule du brevet:
**04.01.89**

(21) Numéro de dépôt: **85401916.3**

(22) Date de dépôt: **01.10.85**

(51) Int. Cl.⁴: **C 09 J 3/14, C 08 L 53/02**

---

(54) **Compositions adhésives à base d'élastomères thermoplastiques et de polyétheramides et leurs utilisations.**

---

(30) Priorité: **16.10.84 FR 8415845**

(43) Date de publication de la demande:
**30.04.86 Bulletin 86/18**

(45) Mention de la délivrance du brevet:
**04.01.89 Bulletin 89/1**

(84) Etats contractants désignés:
**BE DE GB IT NL SE**

(56) Documents cité:
**EP-A-0 068 932**
**EP-A-0 119 491**

(73) Titulaire: **ATOCHEM, 4 & 8, Cours Michelet La Défense 10, F-92800 Puteaux (FR)**

(72) Inventeur: **Borg, Patrick, Rue de l'Abbaye, F-27170 Beaumont- Le- Roger (FR)**
Inventeur: **Boutillier, Jacques, Carsix, F-27300 Bernay (FR)**

EP 0 179 700 B1

LIBER, STOCKHOLM 1989

**Description**

La présente invention a pour objet des compositions adhésives nouvelles à base d'élastomères séquencés et de polyétheramides ainsi que leur utilisation, plus particulièrement en tant qu'adhésifs sensibles à la pression.

Les adhésifs thermofusibles sensibles à la pression et les rubans auto-adhésifs sont bien connus. Jusqu'à présent des compositions adhésives thermofusibles ont été préparées en en mélangeant les deux constituants essentiels élastomère et résines tackifiantes. Les élastomères les plus utilisés sont:
- des copolymères séquencés du type A-B-A, ayant des séquences terminales polystyrèniques et une séquence centrale constituée soit de polybutadiène, soit de polyisoprène, soit de poly(éthylènebutylène)
- ou des copolymères séquencés en étoiles à n branches dont les séquences sont à base de polystyrène et de polybutadiène.

Ces polymères séquencés peuvent être formulés avec des résines tackifiantes et des plastifiants pour obtenir des adhésifs sensibles à la pression, ainsi qu'il est décrit dans les brevets US n° 3 239 478 (Harlan), 4 097 434 (Coker), et dans les articles de J.B. BORTHWICK (1976 TAPPI international Hot Melt Pressure Sensitive Adhesives Short Course, Amsterdam, 3 - 5 Nov. 1976) et de R. DELME (Technology of Plastics and Rubber Interface, Bruxelles, septembre 1976).

Ces compositions adhésives ont de bonnes propriétés de collage, de pouvoir collant permanent et de résistance au pelage, mais leurs résistances au fluage et au cisaillement baissent rapidement avec la température.

Il est cependant connu que l'on peut augmenter la tenue à la température des collages réalisés avec de telles compositions thermofusibles par addition d'une certaine quantité de polymères cristallins de masse moléculaire et de point de fusion élevés. Mais, cette addition provoque une augmentation trop importante de la viscosité à l'état fondu et une disparition du pouvoir collant permanent. Dans cet ordre d'idée selon le EP-A-88932 est décrit l'ajout d'un polyamide, produit d'amidification d'un diamine et d'un diacide, à l'association d'une résine tackifiante avec un polymère bloc non élastomérique.

La présente invention resulte de la constatation que les propriétés adbésives des compositions d'adhésifs thermofusibles sensibles à la pression à base d'élastomères séquencés peuvent être considérablement améliorées par l'addition de polyétheramide; on observe, en effet, que, grâce à cette addition, la résistance à haute température des collages effectués est fortement augmentée sans qu'il y ait perte du pouvoir collant permanent; de plus, il n'y a qu'une très faible augmentation de la viscosité à l'état fondu.

C'est ainsi que les compositions ainsi obtenues peuvent être utilisées avec davantage de satisfaction dans la confection de rubans adhésifs pour les applications les plus diverses.

Par polyétheramide, nous entendons aussi bien les polyétheramides statistiques (c'est-à-dire formés par l'enchaînement aléatoire des divers constituants monomères) que les polyétheramides séquencés, c'est-à-dire formés de blocs présentant une certaine longueur de chaîne de leurs divers constituants.

Les polyétheramides séquencés résultent de la copolycondensation de séquences polyamides à extrémités réactives avec des séquences polyéthers à extrémités réactives, telles que, entre autres:

1. Séquences polyamides à bouts de chaînes diamines avec des séquences polyoxyalkylènes à bouts de chaînes dicarboxyliques.

2. Séquences polyamides à bouts de chaînes dicarboxyliques avec des séquences polyoxyalkylènes à bouts de chaîne diamines obtenues par cyanoéthylation et hydrogénation de polyétherdiols.

3. Séquences polyamides à bouts de chaînes dicarboxyliques, ou mieux de séquences polyamides alpha-oméga dicarboxyliques, avec des séquences polyoxyalkylènes alpha-oméga-dihydroxylées aliphatiques ou polyétherdiols, les polyétheramides obtenus étant, dans ce cas particulier, des polyétheresteramides.

La composition et la fabrication de tels polyétheresteramides ont été décrites dans les brevets français n° 7 418 913 et 7 726 678 description.

Les compositions nouvelles qui font l'objet de la présente invention sont constituées d'au moins un copolymère séquencé de polystyrène et de polydiène, de résines tackifiantes et d'au moins un polyétheramide, ce polyétheramide étant en proportions telles qu'il yen ait de 0,1 à 50 parties et, de préférence, de 3 à 20 parties en poids pour 100 parties de copolymère.

En plus se ces constituants essentiels, ces compositions peuvent bien entendu comprendre des plastifiants, stabilisants à la chaleur ou à la lumière, charges, colorants.

Selon un mode de réalisation de l'invention, le copolymère séquencé est un tri-séquencé linéaire du type A-B-A, dont les séquences terminales sont du polystyrène et la séquence centrale est soit un polybutadiène, soit un polyisoprène, soit un poly(éthylènebutylène). De tels produits sont vendus par la société SHELL CHEMICALS sous le nom de CARIFLEX TR® ou de KRATON®. Le copolymère séquencé peut encore être constitué de séquences de polystryène et de polybutadiène disposées en étoiles.

Selon un autre mode de réalisation, on peut mélanger entre eux des copolymères séquencés, par exemple, un tri-séquencé styrènebutadiène-styrène avec un tri-séquencé styrène-isoprène-styrène...

Selon un mode de réalisation de l'invention, le polyétheramide associé à l'élastomère séquencé est un polyétheresteramide séquencé de poids moléculaire supérieur à 10.000, formé du produit de la copolycondensation d'un polyamide ou copolyamide alpha-oméga dicarboxylique présentant un poids moléculaire de 300 à 15.000 et, de préférence, 600 à 5.000, employé à raison de 95 à 15 % en poids, et d'un polyétherdiol présentant un poids moléculaire de 100 à 6.000 et, de préférence 200 à 3.000, employé à raison de 5 à 85 % en poids, ledit produit présentant un point de fusion compris entre 80 et 210°C et, de préférence, 120 à 180°C et une viscosité à l'état fondue 500 à 5.000 Pa. à 210°C pour une vitesse de cisaillement de 10 s$^{-1}$.

Selon un autre mode de réalisation, ledit polyétheresteramide comprend 80 à 20 % dudit polyamide ou copolyamide et 20 à 80 % dudit polyétherdiol, le polyamide étant un polyamide 6 (PA6) résultant de la polycondensation du caprolactame ou un polyamide 11 (PA11) à base d'acide 11-aminoundécanolque ou un PA 12 à base de lauryllactame et le polyétherdiol étant le polyoxytétraméthylène glycol (PTMG).

On peut également mélanger entre eux les polyétheramides ou polyétheresteramides et ainsi, en jouant sur leur composition et, par suite, leurs propriétés (entre autres, leur point de fusion) ajuster une formule d'adhésif lui permettant de répondre à certains impératifs techniques.

Toute résine tackifiante peut être utilisée dans la composition selon l'invention, sachant que la résine tackifiante, selon sa composition et sa structure chimique, s'associera préférentiellement avec la phase polystyrène ou la phase élastomérique, tel que cela est décrit dans la documentation technique de la société SHELL CHEMICALS. De même les plastifiants, selon qu'il s'agira d'une huile aromatique ou aliphatique, s'associeront préférentiellement avec l'une ou l'autre des phases de l'élastomère séquencé, modifiant ainsi ses propriétés mecaniques et adhésives.

La présente invention a également pour objet les adhésifs thermofusibles obtenus à partir des dites compositions et, bien entendu, leurs utilisations.

D'autres buts et avantages de la présente invention apparaîtront à la lecture de ce qui suit et des exemples donnés à titre illustratif.

Dans la présente description et dans les revendications auxquelles elles donnent lieu:
- les propositions sont exprimées en parties en poids
- la viscosité à l'état fondu est déterminée à l'aide d'un RHEOMAT 30, viscosimètre rotatif fabriqué par la société suisse CONTRAVES
- le point de ramollissement est déterminé par la méthode bille et anneau telle que définie par la norme américaine ASTM E-28
- la résistance au fluage en cisaillement est mesurée en s'inspirant des normes AFERA 4012 P2 et PSTC-7; la composition adhésive avant été appliquée sur un support (par exemple un film de polyester), le ruban adhésif ainsi obtenu est appliqué sur du verre, sur une surface de 25 x 25 mm, à l'aide d'un rouleau PSTC de 2 kg.

L'échantillon est placé dans une étuve et une charge de 500 g est suspendue au ruban.

La mesure peut être effectuée de deux façons:
- la température de l'étuve est augmentée de 5°C/min et on enregistre la température à laquelle le ruban tombe (décrite ci-après sous le terme "température de résistance au fluage")
- la température est maintenue constante (40-50-60-70°C) et on enregistre le temps au bout duquel le ruban tombe (décrit ci-après sous le terme "résistance au fluage en isotherme")
- la résistance au pelage à 180° est déterminée selon les normes AFERA 4001 P 11 et PSTC-1.

## Exemples 1 à 4

Nous rassemblons dans le tableau I suivant les résultats des mesures effectuées sur diverses compositions à teneur variable en polyétheramide.

Ces compositions sont préparées par mélange, à une température de l'ordre de 150 à 200°C, des divers ingrédients dont elles sont constituées, ce mélange étant effectué dans un malaxeur le temps nécessaire à l'obtention d'un produit homogène.

Ces ingrédients sont:
- un élastomère séquencé - le CARIFLEX TR 1107® élastomère triséquencé, styrène-isoprène-styrène, de la société SHELL CHEMICALS
- une résine tackifiante -le FORAL 85® ester de colophane à la glycérine fortement hydrogéné, de la société HERCULES
- un anti-oxydant -l'IRGANOX 101®, pentaérythrityl-tétrakis (3-(3,5 di-ter-buty-4-hydroxyphényl)-propionate), de la société CIBA-GEIGY
- un polyétheramide qui, dans le cas présent, est un polyétheresteramide que, pour des raisons de commodité, nous appellerons PEEA-A, obtenu par copolycondensation, suivant le mode opératoire décrit dans le brevet n° 7 418 913, de 30 parties en poids d'un prépolymère de PA 12 dicarboxylique (obtenu à partir de lauryllactame et d'acide adipique, de masse moléculaire 850 avec 70 parties en poids de polyoxytétraméthylène glycol (PTMG) de masse moléculaire 2.000, ce polyétheresteramide ayant une viscosité inhérente de 1,80 dl.g$^{-1}$ (mesure effectuée à 25°C sur une solution à 0,5 parties en poids de ce polymère dans 100 de m-crésol).

**TABLEAU I**

| EXEMPLES | 1 | 2 | 3 | 4 |
|---|---|---|---|---|
| COMPOSITION - PARTIES EN POIDS | | | | |
| CARIFLEX TR 1107 | 100 | 100 | 100 | 100 |
| FORAL 85 | 100 | 100 | 100 | 100 |
| IRGANOX 1010 | 5 | 5 | 5 | 5 |
| PEEA-A | 0 | 10 | 20 | 30 |
| PROPRIETES PHYSIQUES | | | | |
| VISCOSITE à 200°C 21,5 S$^{-1}$ (Pa-s) | 25 | 35 | 45 | 35 |
| POINT DE RAMOLLISSEMENT (°C) | 92 | 105 | 110 | 115 |
| TEMPERATURE DE RESISTANCE AU FLUAGE (°C) | 105 | 110 | 115 | 120 |
| Résistance au fluage en isotherme (min) à 40°C | 1020 | 3945 | > 4000 | > 4000 |
| à 50°C | 180 | 430 | 1950 | > 2000 |
| à 60°C | 13 | 24 | 140 | 420 |
| à 70°C | 5 | 7,5 | 30 | 50 |

Dans le cas de ces 4 compositions adhésives le pouvoir collant permanent rend possible leur utilisation industrielle en tant qu'adhésifs sensibles à la pression.

**Exemples 5 et 6**

Le tableau II rassemble les résultats de mesures effectuées sur diverses compositions préparées comme dans les exemples 1 à 4.

Les ingrédients en sont:
- un élastomère séquencé: le CARIFLEX TR 1107® déjà décrit
- une résine tackifiante: l'ESCOREZ 1310®, résine de pétrole aliphatique d'ESSO CHIMIE
- un plastifiant le SHELLFLEX 451®, huile aliphatique de SHELL CHEMICALS
- un anti-oxydant l'IRGANOX 1010®, déjà décrit
- un polyétheresteramide le PEEA-A, déjà décrit.

**Exemple 7**

Le tableau III suivant est relatif à des compositions identiques à celles des exemples 1 à 4 à la différence que le polyétheresteramide PEEA-A a été remplacé par un autre polyétheresteramide, que nous appellerons PEEA-B, obtenu par copolycondensation, suivant le mode opératoire décrit dans le brevet français n° 7 418 913, de 67 parties en poids d'un prépolymère de PA 12 dicarboxylique (obtenu à partir de lauryllactame et d'acide adipique, de masse moléculaire 2.000 avec 33 parties en poids de PTMG de masse moléculaire 1.000, ce polyétheresteramide ayant une viscosité inhérente de 1,60 dl.g$^{-1}$.

## TABLEAU II

| EXEMPLES | 5 | 6 |
|---|---|---|
| COMPOSITION - PARTIES EN POIDS | | |
| CARIFLEX TR 1107 | 100 | 100 |
| ESCOREZ 1310 | 125 | 125 |
| SHELLFLEX 451 | 15 | 15 |
| IRGANOX 1010 | 5 | 5 |
| PEEA-A | 0 | 20 |
| | PROPRIETES | PHYSIQUES |
| VISCOSITE à 200°C -1, Os⁻¹ (en Pa.s) | 15 | 20 |
| POINT DE RAMOLLISSEMENT (°C) | 115 | 125 |
| RESISTANCE AU PELAGE A 180°C (en da N/cm) | 0,4 | 0,3 |
| TEMPERATURE DE RESISTANCE AU FLUAGE (°C) | 120 | 135 |
| RESISTANCE AU FLUAGE EN ISOTHERME A 70°C (en min) | 120 | 250 |

Dans le cas de ces deux compositions adhésives, le pouvoir collant permanent rend possible leur utilisation industrielle en tant qu'adhésifs sensibles à la pression.

## TABLEAU III

| EXEMPLES | 1 | 7 |
|---|---|---|
| COMPOSITION - PARTIES EN POIDS | | |
| CARIFLEX TR 1107 | 100 | 100 |
| FORAL 85 | 100 | 100 |
| IRGANOX 1010 | 5 | 5 |
| PEEA-B | 0 | 5 |
| | PROPRIETES | PHYSIQUES |
| VISCOSITE à 200°C -1,0 s⁻¹ (en Pa.s) | 33 | 31 |
| POINT DE RAMOLLISSEMENT (°C) | 92 | 98 |
| RESISTANCE AU PELAGE A 180° (en da N/cm) | 1,8 | 2,4 |
| TEMPERATURE DE RESISTANCE AU FLUAGE (°C) | 105 | 110 |
| RESISTANCE AU FLUAGE EN ISOTHERME A 70°C (en min) | 5 | 15 |

Dans le cas de ces deux compositions adhésives, le pouvoir collant permanent rend possible leur utilisation industrielle en tant qu'adhésifs sensibles à la pression.

## Revendications

1. Compositon adhésive constituée essentiellement de résine tackifiante et d'au moins un copolymère thermoplastique élastomérique séquencé de polystyrène et de polydiène, caractérisé en ce que pour 100 parties en poids de copolymère elle contient de 0,1 à 50 parties, et, de préférence de 3 à 20 parties, d'au moins un polyéthéramide séquencé résultant de la polycondensation de séquences polyamides à extrémités réactives avec des séquences polyéthers à extrémités réactives.

2. Composition selon 1 caractérisée en ce que le copolymère est un copolymère tri-séquencé dont les séquences terminales sont des séquences de polystyrène et la séquence centrale une séquence de polybutadiène, ou de polyisoprène ou de poly(éthylène-butylène).

3. Composition selon 1 caractérisée en ce que le copolymère est constitué de séquences de polystyrène et de polybutadiène disposées en étoiles.

4. Composition selon l'une des revendications 1 à 3 caractérisée en ce que le polyétheramide résulte de la copolycondensation de séquences polyamides diamines avec des séquences polyoxyalkylène dicarboxyliques.

5. Composition selon l'une des revendications 1 à 3 caractérisée en ce que le polyétheramide résulte de la copolycondensation de séquences polyamides dicarboxyliques avec des séquences polyoxyalkylènes diamines.

6. Composition selon l'une des revendications 1 à 3 caractérisée en ce que le polyétheramide est un polyétheresteramide obtenu par polycondensation de séquences polyamides alpha-oméga dicarboxyliques avec des séquences polyoxyalkylènes alpha-oméga-dihydroxylées aliphatiques.

7. Composition selon 6 caractérisée en ce que le polyétheresteamide est obtenu par polycondensation de séquences de polyamides dicarboxyliques de poids moléculaire compris entre 600 et 5.000 appartenant au groupe constitué par les séquences de polyamide 6, de polyamide 11 et de polyamide 12, à raison de 95 à 15 % en poids, avec 5 à 85 % en poids de polyoxytétraméthylène glycol de poids moléculaire compris entre 200 et 3.000.

8. Utilisation de la composition selon l'une des revendications 1 à 7 comme adhésif sensible à la pression.


## Patentansprüche

1. Klebendes Gemisch, im wesentlichen bestehend aus klebrig machendem Harz und mindestens einem thermpplastischem, elastomeren Blockcopolymer aus Polystyrol und Polydien, dadurch gekennzeichnet, daß es auf 100 Gewichtsteile Copolymer 0,1 bis 50 Teile und vorzugsweise 3 bis 20 Teile mindestens eines Blockpolyetheramides aus der Polykondensation von Polyamidblöcken mit reaktionsfähigen Enden mit Polyetherblöcken mit reaktionsfähigen Enden enthält.

2. Gemisch nach Patentanspruch 1, dadurch gekennzeichnet, daß das Copolymer aus drei Blöcken besteht, wobei die Endblöcke Polystyrolblöcke sind und der Zentralblock aus Polybutadien, Polyisopren oder Poly(ethylenbutylen) besteht.

3. Gemisch nach Patentanspruch 1, dadurch gekennzeichnet, daß das Copolymer aus sternförmig angeordneten Blöcken von Polystyrol und Polybutadien besteht.

4. Gemisch nach einem der Patentansprüche 1 bis 3, dadurch gekennzeichnet, daß das Polyetheramid der Copolykondensation von Polyamid-diamin-Blöcken mit Polyoxyalkylen-dicarbonsäure-Blöcken entstammt.

5. Gemisch nach einem der Patentansprüche 1 bis 3, dadurch gekennzeichnet, daß das Polyetheramid der Copolykondensation von Polyamid-dicarbonsäure Blöcken mit Polyoxyalkylen-diamin-Blöcken entstammt.

6. Gemisch nach einem der Patentansprüche 1 bis 3, dadurch gekennzeichnet, daß das Polyetheramid ein Polyetheresteramid ist, das durch Polykondensation von Polyamid-$\alpha,\omega$-dicarbonsäure-Blöcken mit aliphatischen $\alpha,\omega$-Dihydroxypolyoxyalkenblöcken dargestellt wurde.

7. Gemisch nach Patentanspruch 6, dadurch gekennzeichnet, daß das Polyetheresteramid durch Polykondensation von Polyamid-dicarbonsäure-Blöcken eines Molekulargewichts zwischen 600 und 5000 aus der durch die Blöcke von Polyamid 6, Polyamid 11 und Polyamid 12 gebildeten Gruppe mit einem Anteil von 95 bis 15 Gewichtsprozent mit 5 bis 85 Gewichtsprozent Polyoxytetramethylenglykol mit einem Molekulargewicht zwischen 200 und 3000 dargestellt wurde.

8. Anwendung des Gemisches nach einem der Patentansprüche 1 bis 7 als druckempfindlichen Klebstoff.


## Claims

1. An adhesive composition consisting substantially of a sticky resin and at least one elastomeric thermoplastic copolymer with polystyrene and polydiene sequences, characterized in that for each 100 parts by weight of copolymer it contains 0.1 to 50 parts, and preferably 3 to 20 parts, of at least one polyetheramide sequence resulting from polycondensation of polyamide sequences having reactive terminal groups with polyether sequences having reactive terminal groups.

2. A composition according to Claim 1, characterized in that the copolymer is a copolymer with three sequences in which the terminal sequences are polystyrene sequences and the central sequence is a sequence of polybutadiene, polyisoprene or poly(ethylene-butylene).

3. A composition according to Claim 1, characterized in that the copolymer is constituted by sequences of polystyrene and of polybutadiene arranged in stars.

4. A composition according to any one of Claims 1 to 3, characterized in that the polyetheramide results from the copolycondensation of polyamide diamine sequences with dicarboxylic polyoxyalklyene sequences.

5. A composition according to any one of Claims 1 to 3, characterized in that the polyetheramide results from the copolycondensation of dicarboxylic polyamide sequences with polyoxyalklyene diamine sequences.

6. A composition according to any one of Claims 1 to 3, characterized in that the polyetheramide is a polyetheresteramide obtained by polycondensation of alpha-omega-dicarboxylic polyamide sequences with alpha-omega-dihydroxylated aliphatic polyoxyalklyene sequences.

7. A composition according to Claim 6, characterized in that the polyetheresteramide is obtained by polycondensation of dicarboxylic polyamide sequences, with a molecular weight between 600 and 5,000, belonging to a group constituted by sequences of polyamide 6, polyamide 11 and polyamide 12, at a rate of 95 to 15 % by weight, with 5 to 85 % by weight of polyoxytetramethylene glycol having a molecular weight between 200 and 3,000.

8. Use of the composition according to any one of Claims 1 to 7 as a pressure sensitive adhesive.